# DEMANDE DE BREVET EUROPEEN

(11) **EP 2 133 258 A1**
(43) Date de publication de la demande: **16.12.2009**
(21) Numéro de dépôt: 09305526.7
(22) Date de dépôt: 10.06.2009
(51) Int. Cl.: B62D 21/15, B62D 25/08

(54) **Système de reprise d'effort sur la partie basse de l'arrière d'un véhicule**

(30) Priorité: 10.06.2008 FR 0853843
(71) Demandeur: Renault s.a.s., 92100 Boulogne-Billancourt (FR)
(72) Inventeur: Hlubina, Thierry, 92370, CHAVILLE (FR)

(57) **Abrégé**

Le système permet de reprendre les efforts générés en cas de chocs arrières frontaux sur un véhicule dont la garde au sol est relativement importante, en évitant les déformations du bas de l'arrière du véhicule.

Il comprend principalement une pièce de reprise d'effort (13) dont le corps principal (13C) est placé en dessous d'un longeron arrière latéral (11) et fixé contre la traverse extrême arrière (12). Le corps (13C) possède une forme grossièrement triangulaire, de manière à permettre la reprise des efforts entre le longeron arrière latéral (11) et la traverse arrière externe (12). L'ensemble pouvant être complété d'une plaque de fixation latérale externe (15).

Application aux véhicules à garde au sol importante.

## Description

### DOMAINE TECHNIQUE

L'invention concerne la structure arrière du bas de la caisse de certains véhicules vis-à-vis des exigences de sécurité imposées par des nouvelles normes comportant des tests par des chocs arrières pratiqués sur les véhicules en question. Il concerne en particulier des véhicules dont l'arrière du bas de caisse est légèrement haut par rapport aux chocs envisagés dans le cahier des charges définissant la résistance exigée du véhicule, en cas de chocs arrières. Les véhicules du type quatre-quatre sont concernés.

### ÉTAT DE LA TECHNIQUE ANTÉRIEURE ET PROBLEME POSE

Dans le cadre de l'étude de modifications du soubassement, c'est-à-dire de la partie basse de la caisse arrière du véhicule, un nouveau cahier des charges impose un test de chocs au véhicule en marche arrière sur une barrière de tests aux chocs. En d'autres termes, le véhicule doit pouvoir résister aux chocs, en vitesse arrière, sur une barrière disposée à une hauteur déterminée et dont la partie supérieure est susceptible de passer en dessous du soubassement du véhicule. C'est le cas des quatre-quatre qui ont une garde au sol importante, plus haute que celle des véhicules du type berline. En conséquence, sans une traverse arrière externe qui se prolonge vers le bas, ce test de choc ne peut pas avoir lieu, la barrière passant sous le soubassement du véhicule.

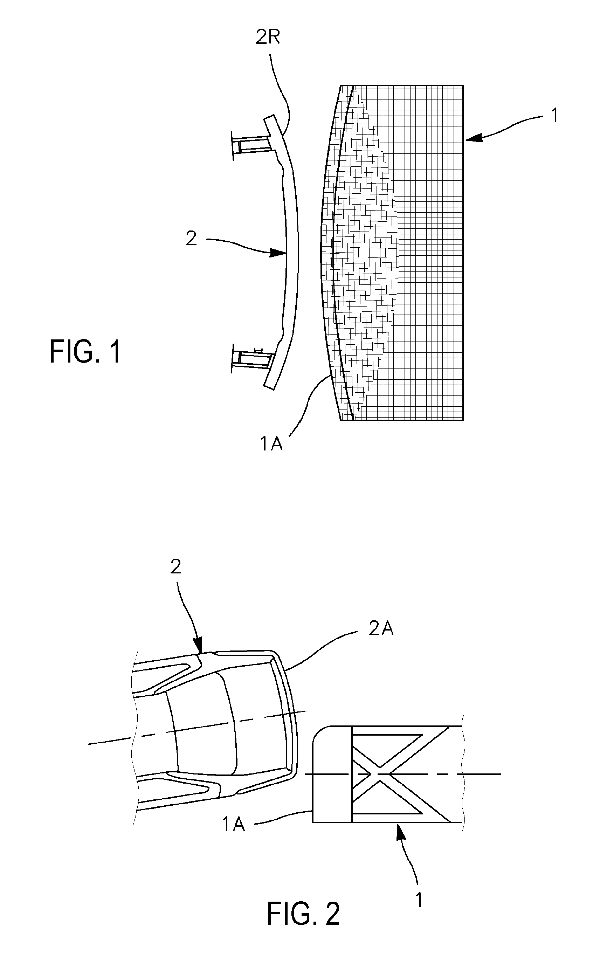

Pour illustrer ce test de chocs, la figure 1 montre une barrière 1 possédant une surface de choc 1A, qui a une forme bombée de façon convexe. Elle montre, en correspondance, un élément de la partie arrière du soubassement d'une caisse de véhicule 2, notamment une face arrière 2R d'une traverse latérale arrière. Ces deux éléments principaux sont dessinés l'un à côté de l'autre, comme si le véhicule 2 allait rencontrer la surface bombée 1A de la barrière 1. Ce type de test est destiné à être effectué à une vitesse de 10,5 km/h, la barrière 1 étant rigide. Dans ce cas, la traverse latérale arrière du véhicule doit se déformer en flexion pour retenir la barrière 1. Le système sera d'autant plus efficace qu'il devra résister à la sollicitation en flexion.

En référence à la figure 2, ce test peut également se passer de façon dissymétrique, c'est-à-dire que le véhicule 2 n'arrive pas complètement dans l'axe, c'est-à-dire longitudinalement par rapport à la barrière 1, mais avec une trajectoire inclinée. Ce test doit avoir lieu à la vitesse de 16 km/h, la barrière étant rigide et l'inclinaison de la trajectoire du véhicule doit être de 10° par rapport à la direction du choc suggéré par la figure 1. Dans ce cas, la traverse arrière du véhicule 2 doit se déformer en compression pour contenir la barrière 1. Le système sera d'autant plus efficace qu'il devra se comprimer et dissiper l'énergie du choc.

Le but de l'invention est donc de remédier à cet inconvénient, en apportant une modification au soubassement de la partie arrière de la caisse du véhicule.

### EXPOSÉ DE L'INVENTION

A cet effet, l'objet principal de l'invention est un système de reprise d'effort sur la partie basse de l'arrière d'un véhicule, notamment en cas de chocs, le véhicule comprenant, entre autres,
- une traverse extrême arrière sur la quasi-totalité de la largeur du véhicule et ayant une hauteur déterminée ; et
- deux longerons arrières latéraux dont une extrémité arrière est fixée sur la partie supérieure de la traverse extrême arrière.

Selon l'invention, pour chaque longeron arrière latéral, on utilise une pièce de reprise d'effort, fixée sur le longeron arrière latéral correspondant et sur la partie inférieure de la traverse extrême arrière.

Dans la réalisation préférée de cette pièce de reprise d'effort, celle-ci possède un corps de section en triangle rectangle, l'angle droit de ce triangle rectangle étant placé dans le coin formé par la traverse extrême arrière et le longeron arrière latéral.

De préférence, on utilise au moins une patte de fixation prolongeant un côté du corps triangulaire de la pièce de reprise d'effort, plaquée et fixée sur le côté externe du longeron arrière latéral correspondant.

L'ensemble peut se compléter d'une plaque de fixation placée entre chaque longeron arrière latéral et la traverse extrême latérale, sur toute la hauteur de l'ensemble.

### BRÈVE DESCRIPTION DES DESSINS

L'invention et ses différentes caractéristiques techniques seront mieux comprises à la lecture de la description suivante, accompagnée de quatre figures, représentant, respectivement,
- figure 1, un schéma relatif à un test de choc arrière que doit subir le véhicule, auquel s'applique l'invention ;
- figure 2, une variante de test de choc arrière, évoqué à la figure 1 ;
- figure 3, en vue longitudinale, le système de reprise d'effort selon l'invention ; et
- figure 4, en vue cavalière de dessous, un véhicule sur lequel est appliqué le système de reprise d'effort selon l'invention.

### EXPOSÉ DÉTAILLÉ DE MODES DE RÉALISATION PARTICULIERS

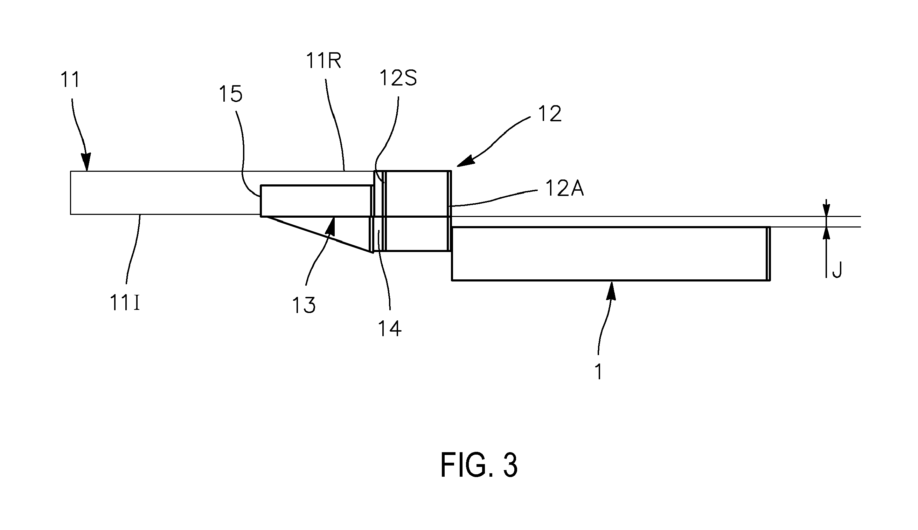

En référence à la figure 3, l'invention met en jeu les parties suivantes du véhicule, qui sont les deux longerons arrières latéraux 11 et la traverse extrême arrière 12, à laquelle les deux longerons arrières latéraux 11 sont fixés. Sur cette figure 3 est également représentée la barrière 1. Le jeu J, relatif à la différence de hauteur entre la surface supérieure 1S de la barrière, et la surface inférieure 11I du longeron arrière latéral montre que sans aménagement selon l'invention, la barrière pourrait passer sous les longerons arrières 11 si la traverse arrière externe 12 ne se prolongeait pas plus bas. En effet, l'invention prévoit que ce soit le cas et que les longerons arrières latéraux 11 soient fixés à la traverse extrême 12 dans la partie supérieure de la surface 12S de cette traverse extrême arrière, de manière à ce que cette dernière dépasse en dessous des longerons arrières latéraux 11 et qu'une partie de sa surface arrière 12R puisse rentrer en contact avec le coin supérieur de la barrière 1.

Concernant la figure 3, dans cette configuration de position de la barrière 1 par rapport aux longerons arrières latéraux 11, il a été décidé de concevoir un système de reprise d'effort dans les trois directions orthogonales et principalement vis-à-vis des couples selon les axes latéral et vertical du véhicule.

Pour éviter les déformations en flexion de la traversée arrière extrême 12, en cas de chocs, une pièce de reprise d'effort 13 est placée de façon fixe à la fois sur chaque longeron latéral arrière 11 et sur la surface de contact 12S de la traversée externe arrière 12. Une plaque intermédiaire 14 peut venir compléter la pièce de reprise d'effort 13.

Cette pièce de reprise d'effort 13 a été représentée de façon trapézoïdale. En fait, elle est constituée principalement d'un corps, qui a une forme en triangle rectangle permettant la transition des efforts, non pas entièrement de la surface de contact 12S de la traverse extrême arrière ou de la plaque de fixation 14 vers l'extrémité arrière 11R du longeron arrière latéral 11, mais en partie par ce corps en forme de triangle rectangle.

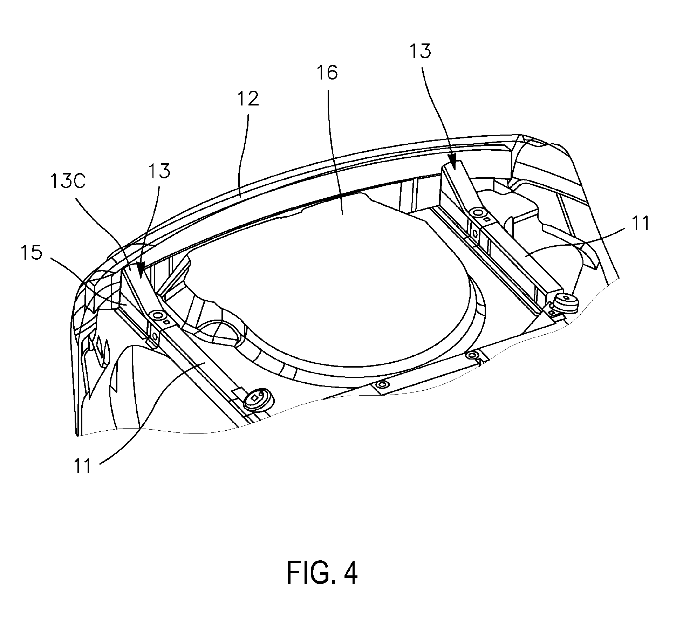

La figure 4 montre, en vue de dessous, la partie arrière de la caisse du véhicule, notamment le fond du coffre et de l'emplacement 16 prévu pour la roue de secours. Elle permet de mieux voir la pièce de reprise d'effort 13 et notamment son corps 13C dont la section a une forme de triangle rectangle. La largeur de cette pièce de reprise d'effort est la même que la largeur des longerons arrières latéraux 11.

La pièce de reprise d'effort 13 et la plaque de fixation 14 peuvent être complétées d'une plaque de fixation 15 latérale, dans le prolongement de la surface externe du corps 13C de la pièce de reprise d'effort 13 et destinée à être plaquée et fixée contre la surface externe du longeron latéral arrière 11 correspondant, ceci pour renforcer la fixation de la pièce de reprise d'effort 13, de chaque côté du bas du véhicule.

On comprendra facilement que tous les efforts, en cas de chocs plus ou moins frontaux arrières, puissent être transférés vers les longerons arrières latéraux 11, notamment pour l'intermédiaire de la pièce de reprise d'effort 13.

Ce système permet d'atteindre un excellent compromis vis-à-vis du coût, de la performance relativement aux chocs et vis-à-vis de la masse du véhicule.

## Revendications

1. Système de reprise d'effort sur la partie basse arrière d'un véhicule, notamment en cas de chocs, le véhicule comportant, entre autres,
- une traverse extrême arrière (12) s'étendant sur la quasi-totalité de la largeur du véhicule et ayant une hauteur déterminée ; et
- deux longerons arrières latéraux (11) dont une extrémité arrière (11R) est fixée sur la partie supérieure de la traverse extrême arrière,
**caractérisé en ce que**, pour chaque longeron arrière latéral (11), on utilise une pièce de reprise d'effort (13) fixée sur le longeron arrière latéral (11) correspondant et sur la partie inférieure de la traverse extrême arrière (12).

2. Système de reprise d'effort selon la revendication 1, **caractérisé en ce que** la pièce de reprise d'effort (13) possède un corps (13C) de section en triangle rectangle.

3. Système de reprise d'effort selon la revendication 1, **caractérisé en ce qu'**il se complète d'une plaque de fixation (14) placée entre chaque longeron arrière latéral (11) et la traverse extrême arrière (12) sur toute la hauteur de l'ensemble.

4. Système de reprise d'effort selon la revendication 2, **caractérisé en ce qu'**il comprend une plaque de fixation (15) prolongeant un côté externe du corps (13C) de la pièce de reprise d'effort (13), plaquée et fixée sur les côtés externes du longeron arrière latéral (11) correspondant.
